# EUROPEAN PATENT APPLICATION

(11) **EP 3 911 061 A1**
(43) Date of publication of application: **17.11.2021**
(21) Application number: 19908367.6
(22) Date of filing: 10.01.2019
(51) Int. Cl.: H04W 72/04, H04W 24/10

(54) **USER DEVICE AND POWER REDUCTION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/000554
(87) International publication number: WO 2020/144817

(57) **Abstract**

Provided is a user equipment including a receiving unit configured to receive a signal, and a control unit configured to perform at least one of measurement, reporting, and monitoring, with regard to a CC or BWP, wherein the control unit performs at least one of the measurement, the reporting, and the monitoring, with regard to the one or some of CCs or BWPs in a group including one or more CCs or BWPs, and applies, as a result of another CC or BWP in the group, a result of the at least one of the measurement, the reporting, and the monitoring performed with regard to the one or some of CCs or BWPs.

## Description

### Technical Field

The present invention relates to a user equipment and a power saving method in a wireless communication system.

### Background Art

In NR (New Radio) (also referred to as "5G"), which is the successor system of LTE (Long Term Evolution), techniques for satisfying, as required conditions, large capacity system, high data transmission speed, low delay, and simultaneous connection of many terminals, low cost, power saving, and the like are being discussed (for example, see Non-Patent Document 1).

In 3GPP RAN1 Release 16, "Study on UE Power Saving for NR" has been taken up as a study item (SI), and discussions have begun.

It is known that, in a case where the number of CCs (Component Carriers) increase due to CA (Carrier Aggregation) or DC (Dual Connectivity) or in a case where a BWP (Bandwidth Part) having a wide bandwidth is activated, the power consumption of user equipment increases, and solutions to reduce the power consumption are discussed.

### Prior Art Document

### Non-Patent Document

Non-Patent Document 1: 3GPP TS 38.300 V15.3.0 (2018-09)

### Summary of the Invention

### Problem to be Solved by the Invention

The following issues can be mentioned as problems related to power consumption of user equipment.

An operation of user equipment related to CC or BWP is basically an operation independent for each CC or BWP.

It takes some time to carry out scheduling since an instruction for transitioning a CC or a BWP between an active state (activated state) or an inactive state (deactivated state) is given, and during that time, a user equipment may not be able to sleep.

Depending on a resource position of an appropriate RS (Reference Signal) required for Measurement and the like, a user equipment may not be able to sleep.

The present invention has been made in view of the above problems, and it is an object of the present invention to provide a technique for reducing a power consumption of a user equipment related to CC or BWP.

### Means for Solving Problem

According to the technique of the present disclosure, provided is a user equipment including a receiving unit configured to receive a signal, and a control unit configured to perform at least one of measurement, reporting, and monitoring, with regard to a CC or BWP, wherein the control unit performs at least one of the measurement, the reporting, and the monitoring, with regard to the one or some of CCs or BWPs in a group including one or more CCs or BWPs, and applies, as a result of another CC or BWP in the group, a result of the at least one of the measurement, the reporting, and the monitoring performed with regard to the one or some of CCs or BWPs.

### Effect of the Invention

According to the technique of the present disclosure, a technique for reducing a power consumption of a user equipment related to CC or BWP is provided.

### Brief Description of Drawings

FIG. 1 is a drawing for explaining a wireless communication system;
FIG. 2 is a drawing for explaining an operation example of a user equipment in a case where the order of priority is configured for a CC or a BWP in a group;
FIG. 3 is a drawing for explaining an operation example of a user equipment in a case where an order of priority is configured for CCs or BWPs in a group;
FIG. 4 is a drawing illustrating an example of a functional configuration of a base station 10 according to an embodiment;
FIG. 5 is a drawing illustrating an example of a functional configuration of a communication apparatus 20 according to an embodiment; and
FIG. 6 is a drawing illustrating an example of a hardware configuration of the base station 10 and the communication apparatus 20 according to the embodiment.

### Mode for Carrying Out the Invention

Embodiments of the present invention will be hereinafter described with reference to drawings. The embodiment described below is an example, and the embodiment to which the present invention is applied is not limited to the following embodiment.

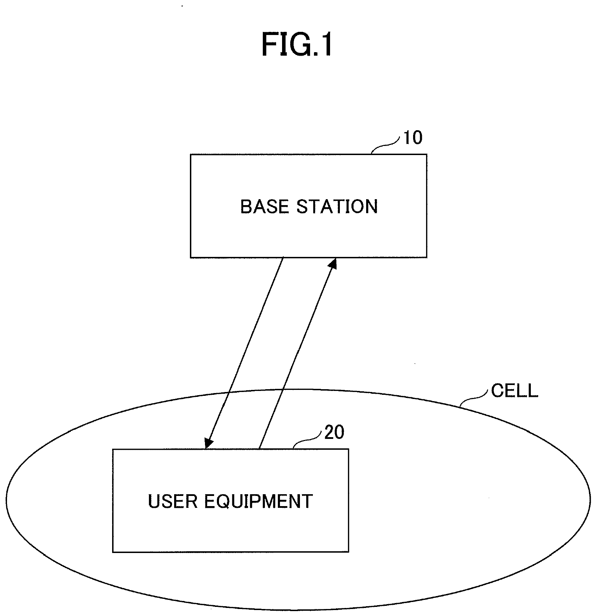

FIG. 1 is a drawing for explaining a wireless communication system according to an embodiment of the present invention. As illustrated in FIG. 1, a wireless communication system according to an embodiment of the present invention includes a base station apparatus 10 and a user equipment 20. In FIG. 1, a single base station apparatus 10 and a single user equipment 20 are illustrated, but FIG. 1 is an example, and multiple base station apparatuses 10 and multiple user equipments 20 may be provided.

### (Group)

A group used in the present embodiment will be explained.

In the present embodiment, a group including one or more CCs or BWPs is configured.

The group may include, as one or more CCs, a CC of PCell (Primary Cell), a CC of PSCell (Primary SCell), and a CC of SCell (Secondary Cell).

One or more CCs included in the group may be constituted by a combination of any given CCs chosen from a CC of PCell, a CC of PSCell, and a CC of SCell. More specifically, the group is a group different from a group such as a PCG (PCell Group) constituted by PCells or an SCG (SCell Group) constituted by SCells.

The group may include one or more BWPs.

Information about a group including one or more CCs or BWPs may be indicated from the base station apparatus 10 to the user equipment 20, or may be specified in advance.

A group index for identifying the group may be used for scheduling CCs or BWPs constituting the group or for indicating an active or inactive state.

### (First embodiment)

In the first embodiment, the user equipment 20 performs CSI measurement, CSI reporting, RRM (Radio Resource Management) measurement, beam management, Radio link monitoring, and the like, with regard to one or some of CCs or BWPs in the group.

The user equipment 20 may apply, as a result of another CC or BWP in the group, a result obtained with regard to the one or some of CCs or BWPs.

The user equipment 20 may apply, as a result of the entire group, a result obtained with regard to the one or some of CCs or BWPs.

The user equipment 20 may use, as a result obtained with regard to a desired CC or BWP, a combination of results obtained with regard to different CCs or BWPs. For example, the user equipment 20 measures an RS of a different CC or BWP and uses the measured RS as a measurement performed with regard to a desired CC or BWP so as to be able to perform as much measurement as possible while the user equipment 20 is not sleeping, so that the user equipment 20 can increase a sleep time and reduce power consumption.

For example, among the group, a CC or a BWP in which CSI measurement is performed may be indicated from the base station apparatus 10 to the user equipment 20, or may be specified in advance.

The user equipment 20 may perform PDCCH monitoring, search space monitoring, and the like, with regard to one or some of CCs or BWPs in the group.

### (Second embodiment)

In the second embodiment, a plurality of groups are configured, and in units of groups, a transition of a CC or a BWP into an active state, an inactive state, and a dormant state is indicated or specified.

In this case, the dormant state of a CC or a BWP means a state in which, with regard to the CC or the BWP, a grant of downlink or uplink is not transmitted to a user equipment, and only CSI measurement and reporting are performed by the user equipment. The dormant state is not introduced to Release 15 of NR, but is discussed in Release 16 of NR. The name of this state is not limited to "dormant", and may be referred to as other names.

In the second embodiment: when the group is in an active state, SI measurement and the like may be performed with regard to all the CCs or BWPs belonging to the group; when the group is in an inactive state, SI measurement and the like may not be performed with regard to all the CCs or BWPs belonging to the group; and, when the group is in a dormant state, SI measurement and the like may be performed with regard to one or some of CCs or BWPs of the CCs or BWPs belonging to the group.

### (Third embodiment)

In the third embodiment, (1) when, in (or using) a CC or a BWP in an active state, a scheduling of a CC or a BWP in an inactive state or a dormant state is indicated to the user equipment 20, the CC or the BWP instructed by the indication may be transitioned to an active state, or (2) when, in (or using) a CC or a BWP in an active state, transitioning of a CC or a BWP in an inactive state or a dormant state into an active state may be indicated to the user equipment 20.

The order of priority of CCs or BWPs belonging to the group may be indicated or specified.

An active state, an inactive state, and a dormant state may be individually specified with regard to each CC or BWP, irrespective of groups, and an operation that can be performed in each state may be performed on the basis of the order of priority.

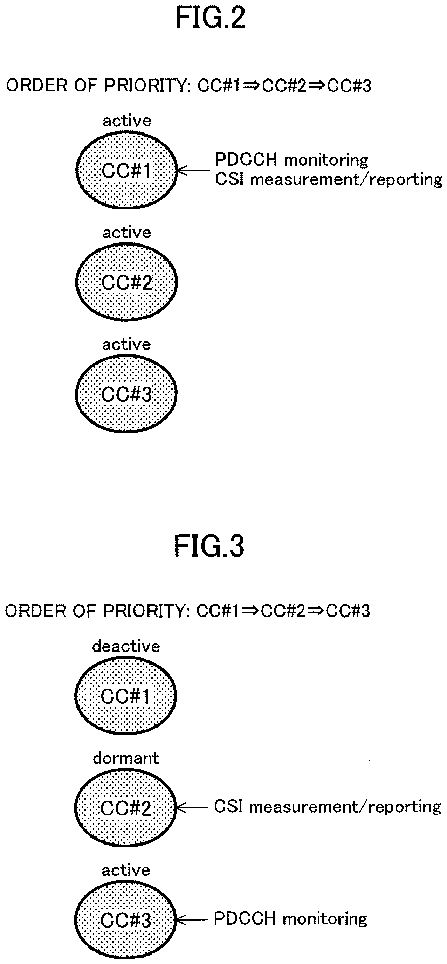

FIG. 2 and FIG. 3 are drawings for explaining an operation example of the user equipment 20 in a case where the order of priority is configured for CCs or BWPs in a group.

In the example of FIG. 2, the order of priority of CC#1, CC#2, CC#3 constituting CCs in a group is such that the degree of priority of CC#1 is the highest, the degree of priority of CC#3 is the lowest, and the degree of priority of CC#2 is a degree of priority in between CC#1 and CC#3 (the degree of priority decreases in the order of CC#1, CC#2, and then CC#3). Any of the states of CC#1, CC#2, and CC#3 is in an active state.

In this example, any of CC#1, CC#2, CC#3 is in the active state, and PDCCH monitoring and CSI measurement/reporting can be performed in any of the CCs, but PDCCH monitoring and CSI measurement/reporting are performed only in CC#1 of the highest priority.

Subsequently, in the example of FIG. 3, the order of priority is such that, in a manner similar to the example of FIG. 2, the degree of priority of CC#1 is the highest, the degree of priority of CC#3 is the lowest, and the degree of priority of CC#2 is a degree of priority in between CC#1 and CC#3 (the degree of priority decreases in the order of CC#1, CC#2, and then CC#3). Regarding the states of CC#1, CC#2, CC#3, CC#1 is in an inactive state, CC#2 is in a dormant state, and CC#3 is in an active state.

In this example, CC#1 of the highest priority is in an inactive state, and accordingly, in CC#1, PDCCH monitoring and CSI measurement/reporting are not performed. In CC#2 of the second priority in the dormant state, CSI measurement/reporting is performed. In CC#3 of the third priority in the active state, PDCCH monitoring is performed.

### (Fourth embodiment)

In the fourth embodiment, requests with regard to the number of groups of CCs or BWPs, the number of CCs or BWPs per group, a group configuration of CCs and BWPs, and the like may be indicated from the user equipment 20 to the base station apparatus 10.

### <Supplements to Embodiment>

In the embodiments described above, which is the one or which are the some of CCs or BWPs, in a group, for an operation such as measurement and the like that is to be performed, may be indicated to the user equipment 20 by using a power saving signal/channel (signal/channel for power saving). The power saving signal/channel includes PDCCH based power saving signals/channels, TRS, CSI-RS, DMRS-based power saving signals/channels, SS-based power saving signals/channels, and the like.

"Indication" and "specification" in the embodiments described above may be indicated using the power saving signal/channel (PDCCH-based, TRS, CSI-RS, DMRS-based, SS based, and the like).

The term "power saving signal/channel" is not limited thereto, and may be referred to as other names.

### <Apparatus configuration>

Next, an example of functional configuration of the base station apparatus 10 and the user equipment 20 that execute the processing and operations described so far will be described. The base station apparatus 10 and the user equipment 20 include a function for implementing the above-described embodiment. However, each of the base station apparatus 10 and the user equipment 20 may have only some of the functions in the embodiment.

### <Base station apparatus 10>

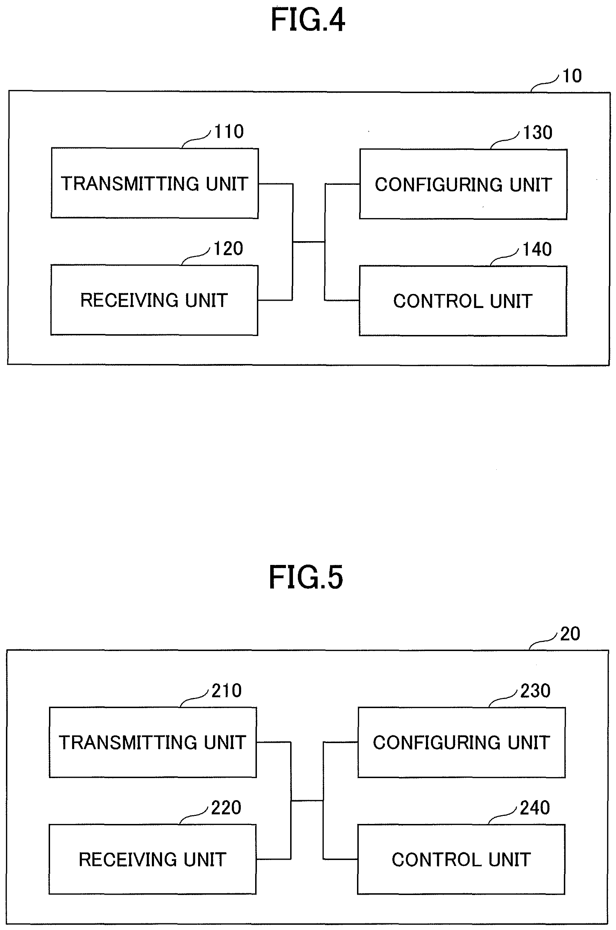

FIG. 4 is a drawing illustrating an example of a functional configuration of the base station apparatus 10. As illustrated in FIG. 4, the base station apparatus 10 includes a transmitting unit 110, a receiving unit 120, a configuring unit 130, and a control unit 140. The functional configuration illustrated in FIG. 4 is only an example. As long as the operation according to the embodiment of the present invention can be executed, the functions may be divided in any way, and the functional units may be given any names.

The transmitting unit 110 includes a function of generating signals to be transmitted to the user equipment 20 and wirelessly transmitting the signals. Also, the transmitting unit 110 transmits information about a group including one or more CCs or BWPs and the like to the user equipment 20. The receiving unit 120 includes a function of receiving various types of signals transmitted from the user equipment 20 and acquiring, for example, information on a higher layer from the received signals.

The configuring unit 130 stores configuration information configured in advance and various configuration information to be transmitted to the user equipment 20 in a storage device and reads out the configuration information from the storage device as needed.

As explained in the embodiment, the control unit 140 performs processing related to configuration with which the user equipment 20 performs measurement, reporting, monitoring, and the like. A functional unit configured to transmit signals in the control unit 140 may be included in the transmitting unit 110, and a functional unit configured to receive signals in the control unit 140 may be included in the receiving unit 120.

### <User equipment 20>

FIG. 5 is a drawing illustrating an example of a functional configuration of the user equipment 20. As illustrated in FIG. 5, the user equipment 20 includes a transmitting unit 210, a receiving unit 220, a configuring unit 230, and a control unit 240. The functional configuration illustrated in FIG. 5 is merely an example. As long as the operation according to the embodiment of the present invention can be executed, the functions may be divided in any way, and the function units may be given any names.

The transmitting unit 210 generates a transmission signal from transmission data and wirelessly transmits the transmission signal. The receiving unit 220 wirelessly receives various types of signals, and acquires a signal in a higher-layer from the received signal in the physical layer. Also, the receiving unit 220 has a function of receiving information about a group including one or more CCs or BWPs that are transmitted from the base station apparatus 10.

The configuring unit 230 stores in a storage device various types of configuration information received from the base station apparatus 10 by the receiving unit 220 and reads out the configuration information from the storage device as needed. The configuring unit 230 also stores configuration information configured in advance.

As explained in the embodiment, the control unit 240 controls execution of measurement, reporting, monitoring, and the like. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 4 and 5) used for explaining the above embodiments illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices.

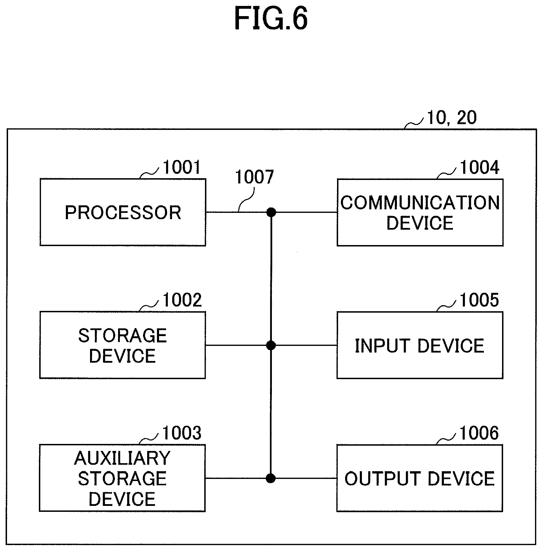

For example, any of the base station apparatus 10, the user equipment 20, and the like according to one embodiment of the present invention may function as a computer that performs processing of a wireless communication according to the present invention. FIG. 6 is a drawing illustrating an example of a hardware configuration of a wireless communication apparatus which is the base station apparatus 10 or the user equipment 20 according to an embodiment of the present invention. Each of the base station apparatus 10 and user equipment 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station apparatus 10 and the user equipment 20 may be configured to include one or more of the devices denoted as 1001 to 1006 illustrated in drawings, or may be configured not to include some of the devices.

Each function of the base station apparatus 10 and the user equipment 20 may be implemented by reading predetermined software (program) to hardware such as the processor 1001, the storage device 1002, or the like, causing the processor 1001 to perform operations, communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the transmitting unit 110, the receiving unit 120, the configuring unit 130, and the control unit 140 of the base station apparatus 10, as illustrated in FIG. 4 may be implemented by a control program that is stored in the storage device 1002 and that is executed by the processor 1001. Also, for example, the transmitting unit 210, the receiving unit 220, the configuring unit 230, the control unit 240 of the user equipment 20, as illustrated in FIG. 5, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform processing according to an embodiment of the present invention.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The auxiliary storage device 1003 may be referred to as an auxiliary storage device. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. For example, the transmitting unit 110 and the receiving unit 120 of the base station apparatus 10 may be achieved by the communication device 1004. The transmitting unit 210 and the receiving unit 220 of the user equipment 20 may be achieved by the communication device 1004.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

Each of the base station apparatus 10 and the user equipment 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to an embodiment of the present invention, provided is a user equipment including a receiving unit configured to receive a signal, and a control unit configured to perform at least one of measurement, reporting, and monitoring, with regard to a CC or BWP, wherein the control unit performs at least one of the measurement, the reporting, and the monitoring, with regard to the one or some of CCs or BWPs in a group including one or more CCs or BWPs, and applies, as a result of another CC or BWP in the group, a result of the at least one of the measurement, the reporting, and the monitoring performed with regard to the one or some of CCs or BWPs.

According to the above configuration, the power consumption of the user equipment related to the CC or the BWP can be reduced.

A transition of a state of the one or more CCs or BWPs included in the group may be indicated, and the transition of the state of the one or more CCs or BWPs may be indicated in a unit of the group.

A transition of the one or more CCs or BWPs from an inactive state to an active state may be instructed through an indication, and the indication may be performed by using a CC or a BWP in the active state, and the indication may include scheduling information about the one or more CCs or BWPs or an instruction of transition of the one or more CCs or BWPs into the active state.

The user equipment 20 may include a transmitting unit configured to transmit, to a base station apparatus, a request for at least one of a number of groups each including one or more CCs or BWPs, a number of the one or more CCs or BWPs per group, and a group configuration of the group including one or more CCs or BWPs.

An indication with regard to the one or more CCs or BWPs may be indicated by using a signal of power saving.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station apparatus 10 and the user equipment 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the indication of information is not limited to the aspect or embodiment described in the present specification, but may be performed by other methods. For example, the indication of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

An aspect/embodiment described in the present specification may be applied to a system that uses LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), other appropriate systems, and/or a next generation system enhanced based thereon.

In the operation procedures, sequences, flowcharts, and the like according to each aspect and embodiment described in the present specification, the orders of steps may be changed unless a contradiction arises. For example, in the methods described in the present specification, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user equipment 20 can be performed by at least one of the base station apparatus 10 and another network node other than the base station apparatus 10 (for example, a MME, a S-GW, or the like may be mentioned, but not limited thereto). In the above, the description has been made for the case where another network node other than the base station apparatus 10 is a single node as an example. But the another network node may be a combination of a plurality of other network nodes (for example, a MME and an S-GW).

An aspect/embodiment described in the present specification may be used independently, may be used in combination, or may be used by switching according to operations.

By the person skilled in the art, the user equipment 20 may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

There is a case in which the base station apparatus 10 may be referred to, by a person skilled in the art, as a NB (NodeB), an eNB (evolved NodeB), a gNB, a base station, or some other appropriate terms.

The terms "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination.

A term "based on" used in the present specification does not mean "based on only" unless otherwise specifically noted. In other words, a term "base on" means both "based on only" and "based on at least".

In a case where any one of "include", "including", and variations thereof is used in the present specification or claims, each of these terms is intended to be inclusive in the same way as the term "comprising". Further, the term "or" used in the present specification or claims is intended to be not exclusive-or.

Throughout the present disclosure, in a case where an article such as "a", "an", or "the" in English is added through a translation, the present disclosure may include a case where a noun following such article is of a plural forms, unless otherwise clearly indicated by the context.

Although the present invention has been described above, it will be understood by those skilled in the art that the present invention is not limited to the embodiment described in the present disclosure. Modifications and changes of the present invention may be possible without departing from the subject matter and the scope of the present invention defined by claims. Therefore, the descriptions of the present invention are for illustrative purposes only, and are not intended to be limiting the present invention in any way.

### Reference Signs List

- 10: base station apparatus
- 110: transmitting unit
- 120: receiving unit
- 130: configuring unit
- 140: control unit
- 20: user equipment
- 210: transmitting unit
- 220: receiving unit
- 230: configuring unit
- 240: control unit
- 1001: processor
- 1002: storage device
- 1003: auxiliary storage device
- 1004: communication apparatus
- 1005: input device
- 1006: output device

## Claims

1. A user equipment comprising:
a receiving unit configured to receive a signal; and
a control unit configured to perform at least one of measurement, reporting, and monitoring, with regard to a CC or BWP,
wherein the control unit performs at least one of the measurement, the reporting, and the monitoring, with regard to the one or some of CCs or BWPs in a group including one or more CCs or BWPs, and applies, as a result of another CC or BWP in the group, a result of the at least one of the measurement, the reporting, and the monitoring performed with regard to the one or some of CCs or BWPs.

2. The user equipment according to claim 1,
wherein a transition of a state of the one or more CCs or BWPs included in the group is indicated, and the transition of the state of the one or more CCs or BWPs is indicated in a unit of the group.

3. The user equipment according to claim 1,
wherein a transition of the one or more CCs or BWPs from an inactive state to an active state is instructed through an indication, and
the indication is performed by using a CC or a BWP in the active state, and
the indication includes scheduling information about the one or more CCs or BWPs or an instruction of transition of the one or more CCs or BWPs into the active state.

4. The user equipment according to claim 1, comprising a transmitting unit configured to transmit, to a base station apparatus, a request for at least one of a number of groups each including one or more CCs or BWPs, a number of the one or more CCs or BWPs per group, and a group configuration of the group including one or more CCs or BWPs.

5. The user equipment according to claim 1,
wherein an indication with regard to the one or more CCs or BWPs is indicated by using a signal of power saving.

6. A power saving method comprising:
a reception step of receiving a signal;
a control step of performing at least one of measurement, reporting, and monitoring, with regard to a CC or BWP,
wherein the control step comprises a step of performing at least one of the measurement, the reporting, and the monitoring, with regard to the one or some of CCs or BWPs in a group including one or more CCs or BWPs, and applying, as a result of another CC or BWP in the group, a result of the at least one of the measurement, the reporting, and the monitoring performed with regard to the one or some of CCs or BWPs.
